# NEW EUROPEAN PATENT SPECIFICATION

(11) **EP 0 181 233 B2**
(45) Date of publication and mention of the opposition decision: **30.09.1998**
(45) Mention of the grant of the patent: 13.01.1993
(21) Application number: 85308150.3
(22) Date of filing: 08.11.1985
(51) Int. Cl.: B05D 1/36

(54) **Protecting substrates**
Schützen von Gegenständen
Protection de substrats

(30) Priority: 09.11.1984 US 670245; 15.02.1985 US 702116
(43) Date of publication of application: 14.05.1986
(60) Divisional application: 92201010.3
(73) Proprietor: RAYCHEM CORPORATION (a Delaware corporation), Menlo Park, California 94025 (US)
(72) Inventor: Pieslak, George, Menlo Park California 94025 (US); John, Robin, Kessel-lo (BE); Van Zele, Eric, Atherton California 94025 (US); Alvernaz, Tony G., Fremont California 94536 (US); Rinde, James Arthur, Fremont California 94539 (US)
(74) Representative: Benson, John Everett

(56) References cited:
- EP-A- 0 065 838
- DE-C- 1 965 802
- GB-A- 1 427 260
- JP-A- 545 432
- JP-A- 5 962 373
- JP-A-56 117 642
- US-A- 3 227 807
- US-A- 4 018 733
- Brochure Mannesmann AG "Mannesmann MAPEC, 3-Layer Corrosion Protection of Large-diameter Pipe", March 1983 Edition

## Description

The invention relates to a method for applying a protective coating to a substrate, in particular a metallic pipe and polymeric substrate.

To protect substrates such as metallic pipes and pipelines from, for example, corrosion or mechanical abuse, a protective coating may be applied.

Various coatings for such substrates are known and many are commercially available. One class of coatings that has been found to be effective include the so-called fusion bonded epoxy coatings. These coatings are applied to the substrate in powdered form and are then heated to relatively high temperatures, about 200-300°C, to cause the powder particles to fuse and flow together and cure to form a continuous coating bonded to the substrate. Typically, the substrate is preheated to these high temperatures before the powdered resin is applied. For good adhesion between the epoxy coating and pipe, it is generally required that the surface of the pipe be adequately cleaned and abraded. The fusion bonded coating may be further protected by application of one or more additional layers. Coating systems of this type are disclosed in US-A-4213486 to Samour and US-A-4510007 to Stucke. A modification of this coating approach is disclosed in US-B-RE30,006 to Sakayori et al in which a modified polyolefin is applied to an uncured epoxy resin coated on a metal surface and then the system is heated to melt bond the uncured epoxy resin and the polyolefin and to cure the epoxy resin. The temperature utilized must be above the melting point of the polyolefin, generally between 80 and 350°C.

Another coating technique is disclosed in US-A-3231443 which describes a method of applying a protective covering to a pipe, comprising applying to the pipe a thin film of an uncured epoxy resin containing a curing catalyst and then applying a laminated film made up of two layers; for example a backing layer of plasticised polyvinyl chloride or polyethylene, and on the inside a layer of cured epoxy resin. The film is applied to the uncured epoxy resin and the catalyst so that the layer of cured resin is in contact with the uncured epoxy resin and the catalyst. The cured and uncured resins interact to form a protective coating. It is said that the coating can be applied in the field. Cured epoxy resins are generally brittle and thus precuring the resin as suggested in US-A-3231443 is likely to be difficult under actual pipe installation conductions, particularly if the pipe is of relatively small diameter. JP 59-62373 discloses a method for producing a resin-coated metal comprising semi-curing a primer and then fusion bonding to the primer a laminated sheet of a modified and an unmodified polyolefin. However, JP 59-62373 does describe a method with a number of features in common with the present invention and for that reason may be considered as the starting point for the present invention. The distinctions of the present invention over JP 59-62373 are however significant, and are evident by comparing the invention as defined by claim 1 against the features of JP 59-62373 set out above.

Another known coating technique, suitable for adhering a polyurethane elastomer to a metal surface is described in EP-A-0065838. The process involves (1) applying a coating of a primary primer which is a curable composition comprising a polyepoxy compound and a polyamide compound, drying this primary coating; then (2) applying a secondary primer comprising an isocyanate compound to the dried primary coating and again drying the second layer; and then finally casting the precursors of the polyurethane elastomer onto the dried second layer and allowing them to harden.

Yet another approach to coating metal substrates is described in US-A-3502492 to Spiller. In this approach a thin layer of powdered epoxy resin is coated on the metal surface and then a thick layer of plasticized polyvinyl chloride particles are applied. The coating is heated causing both the epoxy powder and the polyvinyl chloride powder to adhere to each other and to the underlying substrate. A continuous epoxy-polyvinyl chloride interface is not formed.

In general the above techniques because of the high temperatures and complex equipment required are limited to factory application of the coating or are otherwise impractical under actual field conditions. Application of pipeline coatings in the field, or protection of other substrates such as cable splices, require techniques that employ more moderate temperatures and portable equipment. One successful technique for coating pipelines in the field is the use of a heat-recoverable (i.e. heat shrinkable) polymeric article, such as a tube, sheet or tape, in combination with a heat activatable sealant. In installing such coatings, a torch or other heat source is generally used to heat the article to cause it to recover. This heat also raises the temperature of the heat activatable sealant to above its activation temperature so that a strong bond is formed between the polymeric article and the substrate. Suitable sealants include hot melt adhesives and mastics. There are certain applications in which the substrate may act as a heat sink and prevent the interface between the adhesive and the pipe from attaining the minimum bond line temperature required to form a strong bond between the adhesive and the pipe. One such situation is an oil-carrying pipeline in which the oil is between 25-50°C. Under these conditions it is difficult to retrofit or repair a pipeline coating with a heat recoverable article such as described above.

We have now discovered a coating method which overcomes the deficiencies of these prior techniques. The methods of this invention do not require the high temperature and complex equipment requirements of fusion bonded epoxies and can be used to retrofit or repair existing pipelines carrying oil at temperatures below the activation temperature of typical heat activatable sealants. The method is versatile and can be used in a factory, at a field plant or "over the ditch" to apply protective coatings to various substrates in particular metallic pipelines. The method can be used to protect a variety of substrates including cables, cable splices, conduits, and the like.

It has further surprisingly been found that not only is the unique method versatile and suitable for field or factory use, but the resulting coating on the pipe is superior to similar coatings applied by different techniques.

The invention provides a method of applying a protective covering to a substrate which comprises:
a) applying to the substrate a curable polymeric composition which is liquid at 20°C, is curable to a substantial extent within 24 hours at a temperature of not more than 80°C and comprises: i) a resin component which is liquid at 20°C; and ii) a curing agent;
b) applying a polymeric article comprising at least two layers, the innermost layer of which being a hot melt adhesive capable of interacting with said curable composition onto the substrate to cover the curable polymeric composition before the curable composition is cured to a substantial extent;
c) maintaining the hot melt adhesive in intimate contact with the curable composition while the curable composition is curing, and
d) allowing the curable composition to cure;
   characterised in that:
   (i) the polymeric article is a heat recoverable article , and the step of applying the polymeric article is effected by applying heat to the heat recoverable article to shrink the article, thereby bringing the hot melt adhesive into intimate contact with the curable composition; and
   (ii) the hot melt adhesive reacting with the curable composition as it cures from its substantially uncured state, so that chemical bonds are formed between the curable composition and the hot melt adhesive layer.

Substrates which can be protected by the method of the invention are preferably elongate substrates. The substrates are more preferably cylindrical and even more preferably hollow cylinders, such as pipes or tubing and especially pipes or tubing for carrying oil or gas. The substrate may be of any desired composition but it is preferred that the substrate be metallic or polymeric. Metallic substrates such as pipelines normally comprise iron, steel or steel alloys but may comprise any metal. Polymeric substrates can be polymeric tubing or pipes or polymeric coatings on other substrates. For example, the method of the invention can be used to repair a polymeric coating on a steel pipe or an exposed joint area between two coated pipes. The method of the invention can be used to protect the polymeric coating as well as any exposed metallic substrate.

In accordance with this invention, the substrate is first coated with a curable polymeric composition. The curable polymeric composition is a liquid at 20°C and is curable to a substantial extent within 24 hours at a temperature of not more than 80°C. By "curable to a substantial extent" is meant that the composition has cured to at least about 50%, preferably at least about 65% most preferably at least about 80%, of its fully cured state. The time to substantially cure varies greatly dependent on the particular composition, actual conditions of application, temperature, etc. For many applications it is desirable to use a curable composition which substantially cures in less than about 12 hours, preferably less than about 6 hours. For coating metallic pipes, it is generally preferred to use a curable composition which substantially cures in about 2 to about 30 minutes at 80°C or less.

The curable polymeric composition comprises a resin component, a curing agent and optionally a Bronsted base. The resin component is a liquid at 20°C. The curing agent also is preferably a liquid at 20°C. A solvent may be present in the curable composition but preferred curable compositions contain little or no solvent. In general, no more than about 20% by weight of the composition should comprise solvent, preferably no more than 5% and most preferably the composition is solvent-free.

The resin component of the curable composition preferably comprises a thermosetting resin, for example a liquid epoxy resin, such as bisphenol A epoxies, novolak epoxies, 1,2-epoxies, or coal tar epoxies, prepolymer precursers of polyurethanes and/or coal tar urethanes, polyesters (unsaturated and alkyl), acrylates, polyimides, silicones, etc.

The curable polymeric composition also comprises a curing agent for the resin component. The curing agent is selected such that under the conditions of application the resin selected will be cured to a substantial extent within the desired time period. In preferred embodiments, the resin component comprises an epoxy resin and the curing agent may be a catalytic curing agent, a reactive curing agent or mixtures thereof. Examples of catalytic curing agents are anionic catalysts such as metal alkoxides, isocyanurates or more preferably materials containing free amine groups. Preferred catalytic curing agents are tertiary amines, for example, pyridine, 2,4,6-tris(dimethylaminomethyl) phenol, dimethylaminopropyl amine, benzyldimethyl amine, triethyl amine or 1-methyl imidazole; or secondary amines, for example, piperidine, diethanol amine or imidazole. Examples of reactive curing agents include polyamides (for example, Versamid Polyamides from Henkel), polyamines, for example, ethylene diamine, ethylene triamine, diethylene triamine, or triethylene tetramine, and adducts of the above polyamides and polyamines or similar amines, for example the adduct of polyamide with a bisphenol A epoxy resins. Other catalysts useful in combination with reactive curing agents include phenolic compositions such as phenol, bisphenol A, catechol, resorsinol and other compounds containing hydroxy groups.

The curing agent or combination of curing agents used comprise at least one substance which is a Bronsted base. A Bronsted base is a molecular substance capable of accepting a proton (i.e. a hydrogen ion). It has been found that surprisingly strong bonds and resistance to cathodic disbonding are achieved when the curable polymeric composition results in a cured composition which is basic. To ensure basicity of the cured composition, excess Bronsted base, that is an amount in excess of that required to effect curing of the composition is preferably used. Generally, the Bronsted base is added in an amount of at least 0.01 moles in excess of that necessary to effect cure of the composition. Preferably, the Bronsted base is added in an amount of 0.01 to 2 moles in excess. In a preferred embodiment the Bronsted base is a reactive curing agent and is used in an amount greater than a 1:1 ratio of basic curing agent to reactive resin, and preferably between a ratio of about 1:1 to about 3:1.

When providing excess base it is important that the cured polymeric composition have the appropriate hardness and resistance to cathodic disbonding, either or both of which can be adversely affected if too much Bronsted base is added. When excess base is added to the curable composition the Tg of the resulting cured polymeric composition is lowered. In general, it is preferred that the cured composition have a Tg of at least about 50°C, and preferably between about 50 to about 120°C to provide the necessary properties.

The curable polymeric composition may contain an additive for improving the adhesion of the curable polymeric composition to the substrate such as coupling agents or adhesion promoters. Such additives can be in the resin, the curing agent or added separately and include, for example, silanes, p-quinone oximes, dioximes and metal deactivators. These additives preferably are included in an amount of from about .1% to about 10% by weight, based on the weight of the curable polymeric composition.

Preferred curable compositions contain a silane as an adhesion promoting additive. Silanes are compounds similar to hydrocarbons in which at least one tetravalent Si replaces a C atom. A wide variety of silanes are known and many commercially produced silanes are available. See, for example, U.S. Patent No. 3,490,934, incorporated herein by reference. Other representative examples of silanes include gamma-glycidoxy-propyl-trimethoxy silane, gamma-amino propyl trimethoxy silane, aminopropyltriethoxysilane, 3-(2-aminoethyl) (aminopropyl) trimethoxy-silane, glycidoxy propyl-trimethoxysilane, vinyltriacetoxy silane, vinyltris (methoxyethoxy)-silane,beta-(3,4epoxy cyclohexyl)ethyl trimethoxy silane, and N-vinylbenzyl-N-2-(trimethoxysilyl propylamino) ethyl ammonium choride.

Examples of p-quinone oximes and dioximes and metal diactivaters are disclosed in U.S. Patents Nos. 4,455,204, 4,287,034, 3,658,755 and 3,799,908.

The components of the curable polymeric composition (i.e. resin, curing agent, excess Bronsted base, if present, and any additives) are mixed prior to application. The curable polymeric composition is applied to the area of the substrate to be protected at a temperature (T₁) which is from about ambient temperature (i.e. about 20°C) to not more than about 80°C, preferably not more than about 60°C. It is preferred to preheat the substrate to about T₁ before applying the curable composition. The substrate may be preheated by any convenient technique. Where the substrate is a pipeline carrying oil or other fluid at temperatures of about T₁, a separate preheated step is not necessary. Preheating of the substrate may also be achieved during cleaning thereof, for example, shotblasting of metallic pipes heats the pipe up to about 50°C. Welding of metal pipes, for example when welding together pipe ends, may also heat the pipe to the desired temperature. Direct heating of the substrate, for example, with a torch or other flame may be desired if the substrate is not otherwise preheated.

The curable polymeric composition may be applied by any method for applying liquid coating compositions, for example, brushing, wiping, dipping or spraying. The curable polymeric composition may be applied in one or more coats if desired. Subsequent coats may be applied directly to the previous coat or applied to the surface of the polymeric layer which is to come into intimate contact therewith.

The curable composition is preferably applied in an amount to provide a coating between 5.1x10⁻⁵m to 2.5x10⁻⁴m (2 to 10 mils) thick, preferably 7.6x10⁻⁵m to 1.8x10⁻⁴m (3 to 7 mils).

The curable polymeric composition is covered by an article having at least two polymeric layers before it is permitted to cure to a substantial extent, that is while it is substantially uncured. The polymeric article having at least two polymeric layers is applied by heat shrinking.

The innermost polymeric layer, that is the layer placed in direct contact with the curable composition, is capable of interacting with the curable composition so that chemical bonds are formed. This layer is maintained in intimate contact with the curable composition while it is uncured. The terms "interact" or "interacting" in general are used herein to mean that the innermost layer and the curable composition form an integral unit, i.e. cannot be readily separated, when the curable composition is cured in intimate contact with the innermost layer. The interaction must produce chemical bonds, and there may be a physical interaction in addition. Physical interaction can be, for example, penetration of the curable composition into the material of the innermost polymeric layer where it becomes entrapped on curing thereof. Penetration of the curable composition by adsorption or adsorption into the polymeric layer may be enhanced, if desired, by incorporating into the polymeric layer an appropriate filler. Fillers that can be used include pigments, agents such as carbon black, alumina trihydrate, clay, mineral fiber, silica, calcium silicate, barium sulfate, zinc sulfate, titanium dioxide, zinc sulfide, lithopone, ferric oxide, coated or functionalized fillers such as functionalized aluminum silicates such as mecaptans, amine or vinyl, or silanes, organic titinates, etc.

Another example of physical interaction comprises the use of a polar curable composition, e.g. an epoxy-based curable composition, together with a polar innermost polymeric layer so that a polar interaction occurs at the intimate interface between the two materials.

Chemical bonds are produced between the curable composition and the innermost polymeric layer. For example, the use of an innermost polymeric layer containing reactive amine groups either in the polymer structure or as an additive, over a curable epoxy resin layer will result in formation of bonds between the curable composition and the polymeric layer.

The innermost layer is a hot melt adhesive selected so that it is capable of forming chemical bonds with the curable composition. The hot melt adhesive can be any sealant typically used to bond corrosion protection coatings to metal and particularly those generally used to bond a coating to a pipeline which is cathodically protected (e.g. impressed current or sacraficial anode) to protect the pipeline from corrosion, abrasion or impact damage, etc. Such hot melt adhesives include those based on thermoplastic polyamides, polyolefins, polyesters, polyurethanes, polysulfides and the like. Especially preferred are polyamideor ethylene terpolymer-based not melt adhesives. Particularly preferred are hot melt adhesives containing ethylene co- or terpolymers, for example co- or terpolymers of ethylene with one or more of vinyl acetate, maleic anhydride, acrylic acid, methacrylic acid or alkyl acrylate such as ethyl acrylate. Various additives may be included in the hot melt adhesive as desired such as waxes, rubbers, stabilizers and the like. Other examples of additives are in U.S. Patent Nos. 4,455,204 and 4,287,034.

The outermost polymeric layer is preferably a preformed shaped article. According to the invention, a heat recoverable polymeric article coated on the surface thereof with a hot melt adhesive, as described above, is used to apply a double layer polymeric covering over the curable polymeric material. Heat is applied, preferably from an external heat source, to cause the article to recover, i.e. shrink, so that the hot melt adhesive comes into intimate contact with the curable composition. The curable composition is permitted to cure at a temperature at which the polymeric article, i.e. the outermost polymeric layer, does not melt or flow. The outermost polymeric layer preferably comprises a polyolefin such as polyethylene or polypropylene; acrylic rubber; EPDM; nitrile rubber; epichlorohydrin elastomer; polysulfide; acrylic elastomer; butyl rubber or the like.

Each of the polymeric layers and the curable polymeric composition either independently or together may also contain appropriate other additives such as tackifiers, fillers, corrosion inhibitors, waxes, uncured epoxy resins, rubbers, stabilizers, adhesion promoters, e.g. for improving cathodic disbonding properties, and the like.

The following examples illustrate the invention. The compositions are tested for resistance to cathodic disbondment by using the hot melt adhesive sealant and epoxy composition to bond a heat shrinkable sleeve of polyethylene to a steel pipe. The polyethylene coated pipe is then tested by the method of ASTM G-42 method A to determine the resistance of the adhesive to cathodic disbondment and tested by the method of ASTM D-1000 for peel strength at ambient temperature and at 75°C.

### DESCRIPTION OF THE PREFERRED EMBODIMENTS

### Examples 1 through 11

A two component epoxy bisphenol A system which is amine rich was mixed and applied with a brush to clean, shotblasted steel pipe which is at a temperature of between ambient and about 175°C as indicated in the Table I, has been preheated to 50-60°C. A heat shrinkable polyethylene outer layer is coated with a hot melt adhesive, either a copolymer of polyethylene and vinyl acetate (Adhesive #1), a copolymer of polyethylene and ethyl acrylate (Adhesive #2) or a blend of a polyamide and a polyethylene vinyl acetate, methacrylic acid terpolymer (Adhesive #3). The coated tube was applied to the coated pipe and recovered by torching. In Examples 4 and 5 only the heat shrinkable polyethylene outer layer is applied with no hot melt adhesive. Pipe and coating were allowed to rest for 24 hours before samples were tested. Controls using no epoxy at elevated temperature (125-200°C) and at 50°-60°C also performed in similar manner. Samples prepared in such a manner were tested for peel strength at ambient temperature and at 75°C (ASTM D-1000); and for cathodic disbonding resistance at 75°C (ASTM G-42) and impact resistance (ASTM-G-14). The results are show in Table I and II. In the examples, examples 1, 2, 4, 5, 6, 7, 9 and 11 in Table I and the examples referenced (2) in Table II are comparative examples

**TABLE I**

| EXAMPLE | ADHESIVE | EPOXY COATED | PIPE TEMPERATURE | PEEL STRENGTH kg/m (PLI) AT. | | IMPACT RESISTANCE m-kg |
|---|---|---|---|---|---|---|
| | | | | 23°C | 75°C | |
| 1 | Adhesive #1 | No | 125°C | 251 (14.0) | 15 (1.0) | 0.38 (33 in-lb) |
| 2 | " | No | 50°C | <15 (<1.0) | - | |
| 3 | " | Yes | 50°C | 204 (11.4) | 21 (1.2) | 0.81 (70 in-lb) |
| 4 | | Yes | Ambient (25°C) | - | - | |
| 5 | | Yes | Ambient (25°C) | - | - | |
| 6 | Adhesive #2 | No | 175°C | 152 (8.5) | 8.9 (0.5) | |
| 7 | " | No | 50°C | <15 (<1.0) | - | |
| 8 | " | Yes | 50°C | 129 (7.2) | 7.2 (0.4) | |
| 9 | Adhesive #3 | No | 50°C | - | <15 (<1.0) | |
| 10 | " | Yes | 50°C | >1611 (>90.0) | 54 (3.0) | |
| 11 | " | No | >175°C | >1611 (>90.0) | 54 (3.0) | |

**TABLE II**

| ADHESIVE | EPOXY COATED | PIPE TEMPERATURE | CATHODIC DISBONDING RADIOS AT 75°C (MM) | | |
|---|---|---|---|---|---|
| | | | 1 WK. | 2WKS. | 4 WKS. |
| Adhesive #1(2) | No | 125°C | 5 | Complete(1) | - |
| Adhesive #1(2) | Yes | 50°C | 4 | 6 | 15 |
| Adhesive #1(2) | Yes | Ambient (25°C) | 2 | 3 | 3 |
| Adhesive #1(2) | Yes | Ambient (25°C) | 3 | 7 | 10 |
| Adhesive #2(2) | No | 175°C | 20 | 35 | 50 |
| Adhesive #2(2) | Yes | 80°C | 7 | 9 | 11-13 |
| Adhesive #3(2) | No | 50°C | Complete(1) | - | - |
| Adhesive #3(2) | Yes | 50°C | - | - | 10 |
| Adhesive #3(2) | No | >175°C | Complete(1) | - | - |

| | | | | | |
|---|---|---|---|---|---|
| 1. Complete disbondment of coating from the substrate. | | | | | |
| 2. Comparative examples. | | | | | |

### Example 12

In the following Examples a bisphenol A epoxy was cured with varying amounts of an amine curing agent and a backing coating with adhesive #1 as used in Examples 1-9. 100% represents equal reactive amounts of each component in the curable polymeric composition.

| Mix Ratio Epoxy/Amine | Reactive Amounts | Cathodic Disbonding @ 60°C - 30 days ⁽¹⁾mm | Tg°C |
|---|---|---|---|
| 100/10 | 58% Epoxy Rich | 26(²) | 69 |
| 100/17 | 100% | 19 | 72 |
| 100/30 | 170 Amine Rich | 16 | 73 |
| 100/40 | 230% Amine Rich | 16 | 68 |
| 100/50 | 290% Amine Rich | 24 | 49 |
| 100/60 | 345% Amine Rich | 23 | 25 |
| 100/80 | 460% Amine Rich | 25 | <25 |
| 100/100 | 575% Amine Rich | 23 | <25 |

| | | | |
|---|---|---|---|
| (1) avg. of at least 3 samples. | | | |
| (2) loss of adhesion between hot melt and primer as well as blister in primer. | | | |

## Claims

1. A method of applying a protective covering to a substrate which comprises:
a) applying to the substrate a curable polymeric composition which is liquid at 20°C, is curable to a substantial extent within 24 hours at a temperature of not more than 80°C and comprises: i) a resin component which is liquid at 20°C; and ii) a curing agent;
b) applying a polymeric article comprising at least two layers, the innermost layer of which being a hot melt adhesive capable of interacting with said curable composition onto the substrate to cover the curable polymeric composition before the curable composition is cured to a substantial extent,
c) maintaining the hot melt adhesive in intimate contact with the curable composition while the curable composition is curing, and
d) allowing the curable composition to cure;
characterised in that:
(i) the polymeric article is a heat recoverable article, and the step of applying the polymeric article is effected by applying heat to the heat recoverable article to shrink the article, thereby bringing the hot melt adhesive into intimate contact with the curable composition; and
(ii) the hot melt adhesive reacting with the curable composition as it cures from its substantially uncured state, so that chemical bonds are formed between the curable composition and the hot melt adhesive layer.

2. A method in accordance with claim 1, wherein the curable polymeric composition additionally comprises a Bronsted base in an amount sufficient to render the composition basic.

3. A method in accordance with claim 1 or 2, wherein said curable composition contains a Bronsted base in an amount of 0.01 to 2 moles in excess of that Bronsted base required to effect cure of the composition.

4. A method in accordance with claim 3, wherein said curable polymeric composition comprises a Bis-phenol A epoxy resin, a polyamide and a tertiary amine.

5. A method in accordance any of the preceding claims, wherein said curable polymeric composition further comprises 0.1 to 10% by weight, based on the weight of the composition, of a silane.

6. A method in accordance with any of the preceding claims wherein the curable composition contains less than 5% by weight, based on the weight of the composition, of a solvent.

7. A method in accordance with any of the preceding claims which further comprises the step of heating the substrate to a temperature of not more than 80°C, preferably not more than 60°C, prior to applying said curable composition.

8. A method in accordance with any of the preceding claims wherein said curable composition is cured at a temperature of not more than 80°C, preferably not more than 60°C.

9. A method in accordance with any preceding claim, wherein the hot melt adhesive contains reactive amine groups, and is preferably a polyamide based hot melt adhesive.

10. A method in accordance with any preceding claim, wherein the hot melt adhesive is an ethylene terpolymer based hot melt adhesive.

11. A method in accordance with any preceding claim, wherein the resin component in the curable polymeric composition is an epoxy resin.

## Patentansprüche

1. Verfahren zum Aufbringen einer Schutzumhüllung auf ein Substrat, das die folgenden Schritte aufweist:
a) auf das Substrat wird eine härtbare polymere Zusammensetzung aufgebracht, die bei 20 °C flüssig ist, innerhalb von 24 h bei einer Temperatur von nicht mehr als 80 °C in erheblichem Maße härtbar ist und aufweist: i) eine Harzkomponente, die bei 20 °C flüssig ist; und ii) ein Härtemittel;
b) Aufbringen eines polymeren Gegenstands auf das Substrat, der wenigstens zwei Schichten aufweist, von denen die innerste Schicht ein Schmelzklebstoff ist, der imstande ist, mit der härtbaren Zusammensetzung in Wechselwirkung zu treten, um die härtbare polymere Zusammensetzung zu bedecken, bevor die härtbare Zusammensetzung in erheblichem Maße gehärtet ist;
c) Halten des Schmelzklebstoffs in innigem Kontakt mit der härtbaren Zusammensetzung, während die härtbare Zusammensetzung härtet; und
d) Härtenlassen der härtbaren Zusammensetzung;
dadurch gekennzeichnet, daß:
(i) der polymere Gegenstand ein wärmerückstellbarer Gegenstand ist und der Schritt des Aufbringens des polymeren Gegenstands durchgeführt wird durch Aufbringen von Wärme auf den wärmerückstellbaren Gegenstand, um den Gegenstand aufzuschrumpfen, wodurch der Schmelzklebstoff in innigen Kontakt mit der härtbaren Zusammensetzung gebracht wird; und
(ii) der Schmelzklebstoff mit der härtbaren Zusammensetzung reagiert, während sie aus ihrem im wesentlichen ungehärteten Zustand härtet, so daß zwischen der härtbaren Zusammensetzung und der Schmelzklebstoffschicht chemische Bindungen gebildet werden.

2. Verfahren nach Anspruch 1, wobei die härtbare polymere Zusammensetzung zusätzlich eine Brønsted-Base in einer Menge aufweist, die ausreicht, um die Zusammensetzung basisch zu machen.

3. Verfahren nach Anspruch 1 oder 2, wobei die härtbare Zusammensetzung eine Brønsted-Base in einer Menge von 0,01 bis 2 mol im Überschuß der Brønsted-Base enthält, die erforderlich ist, um das Härten der Zusammensetzung zu bewirken.

4. Verfahren nach Anspruch 3, wobei die härtbare polymere Zusammensetzung ein Bisphenol-A-Epoxidharz, ein Polyamid und ein tertiäres Amin aufweist.

5. Verfahren nach einem der vorhergehenden Ansprüche, wobei die härtbare polymere Zusammensetzung ferner 0,1 bis 10 Gew.-%, bezogen auf das Gewicht der Zusammensetzung, eines Silans aufweist.

6. Verfahren nach einem der vorhergehenden Ansprüche, wobei die härtbare Zusammensetzung weniger als 5 Gew.-%, bezogen auf das Gewicht der Zusammensetzung, eines Lösungsmittels aufweist.

7. Verfahren nach einem der vorhergehenden Ansprüche, das ferner den folgenden Schritt aufweist: Erwärmen des Substrats auf eine Temperatur von nicht mehr als 80 °C, bevorzugt nicht mehr als 60 °C, vor dem Aufbringen der härtbaren Zusammensetzung.

8. Verfahren nach einem der vorhergehenden Ansprüche, wobei die härtbare Zusammensetzung bei einer Temperatur von nicht mehr als 80 °C, bevorzugt nicht mehr als 60 °C, gehärtet wird.

9. Verfahren nach einem der vorhergehenden Ansprüche, wobei der Schmelzklebstoff reaktive Aminogruppen enthält und bevorzugt ein Schmelzklebstoff auf Polyamidbasis ist.

10. Verfahren nach einem der vorhergehenden Ansprüche, wobei der Schmelzklebstoff ein Schmelzklebstoff auf Ethylenterpolymerbasis ist.

11. Verfahren nach einem der vorhergehenden Ansprüche, wobei die Harzkomponente in der härtbaren polymeren Zusammensetzung ein Epoxidharz ist.

## Revendications

1. Procédé d'application d'un revêtement protecteur à un substrat, qui comprend les étapes consistant :
a) à appliquer au substrat une composition polymérique durcissable qui est liquide à 20°C, qui est durcissable en grande partie dans les limites de 24 heures à une température non supérieure à 80°C, et qui comprend : i) une résine qui est liquide à 20°C ; et ii) un agent de durcissement ;
b) à appliquer un article polymérique comprenant au moins deux couches, dont la couche la plus intérieure est cosntituée d'un adhésif thermofusible capable d'interagir avec ladite composition durcissable, sur un substrat pour couvrir la composition polymérique durcissable avant le durcissement en grande partie de ladite composition durcissable ;
c) à maintenir l'adhésif thermofusible en contact intime avec la composition durcissable lors du durcissement de ladite composition durcissable ; et
d) à laisser la composition durcissable durcir ;
caractérisé en ce que :
(i) l'article polymérique est un article doué de reprise dimensionnelle à chaud, et l'étape d'application de l'article polymérique est effectuée en chauffant l'article doué de reprise dimensionnelle à chaud pour provoquer le retrait de l'article, ce qui met l'adhésif thermofusible en contact intime avec la composition durcissable ; et
(ii) l'adhésif thermofusible réagit avec la composition durcissable lors de son durcissement à partir de son état pratiquement non durci, ce qui fait que des liaisons chimiques sont formées entre la composition durcissable et la couche d'adhésif thermofusible.

2. Procédé suivant la revendication 1, dans lequel la composition polymérique durcissable comprend en outre une base de Brönsted en une quantité suffisante pour rendre la composition basique.

3. Procédé suivant la revendication 1 ou 2, dans lequel la composition durcissable contient une base de Brönsted en une quantité de 0,01 à 2 moles en excès de la base de Brönsted requise pour provoquer le durcissement de la composition.

4. Procédé suivant la revendication 3, dans lequel la composition polymérique durcissable comprend une résine époxy dérivée du Bisphénol A, un polyamide et une amine tertiaire.

5. Procédé suivant l'une quelconque des revendications précédentes, dans lequel la composition polymérique durcissable comprend en outre 0,1 à 10 % en poids, sur la base du poids de la composition, d'un silane.

6. Procédé suivant l'une quelconque des revendications précédentes, dans lequel la composition durcissable contient moins de 5 % en poids, sur la base du poids de la composition, d'un solvant.

7. Procédé suivant l'une quelconque des revendications précédentes, qui comprend en outre l'étape de chauffage du substrat à une température non supérieure à 80°C, de préférence non supérieure à 60°C, avant application de la composition durcissable.

8. Procédé suivant l'une quelconque des revendications précédentes, dans lequel la composition durcissable est durcie à une température non supérieure à 80°C, de préférence non supérieure à 60°C.

9. Procédé suivant l'une quelconque des revendications précédentes, dans lequel l'adhésif thermofusible contient des groupes amine réactifs, et est de préférence un adhésif thermofusible à base de polyamide.

10. Procédé suivant l'une quelconque des revendications précédentes, dans lequel l'adhésif thermofusible est un adhésif thermofusible à base d'un terpolymère d'éthylène.

11. Procédé suivant l'une quelconque des revendications précédentes, dans lequel la résine utilisée dans la composition polymérique durcissable est une résine époxy.
